(19) Europäisches Patentamt / European Patent Office / Office européen des brevets

(11) **EP 3 910 525 A1**

(12) **EUROPEAN PATENT APPLICATION**

(43) Date of publication:
**17.11.2021 Bulletin 2021/46**

(51) Int Cl.:
***G06F 40/30*** *(2020.01)*

(21) Application number: **20190280.6**

(22) Date of filing: **10.08.2020**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **VOLKSWAGEN AG**<br>**38440 Wolfsburg (DE)**<br><br>(72) Inventor: **Asgari, Ehsaneddin**<br>**München 81675 (DE)** |

(30) Priority: **15.05.2020 DE 102020206163**

(54) **METHOD, COMPUTER PROGRAM AND APPARATUS FOR DETECTING A SEMANTIC CHANGE OF A WORD BETWEEN DOMAINS**

(57)    The present invention is related to a method, in particular a machine learning-based method, a computer program, and an apparatus for detecting a semantic change of a word between domains. The invention is further related to a system for domain-specific text processing or language understanding, which makes use of such a method or apparatus, and to a vehicle comprising such a system. In a first step, a language model-based embedding is trained (10) separately for text corpora in a first domain and a second domain. Furthermore, a pivot set is generated (11) from the text corpora. Pivot resamples may be generated (12) from the pivot set. Profiles are then created (13) for the word for the first domain and the second domain based on the pivot set or the pivot resamples. Furthermore, a divergence of the profiles for the word for the first domain and the second domain is calculated (14). Finally, the divergence or a value derived from the divergence is provided (15) as a measure of the semantic change.

FIG. 1

EP 3 910 525 A1

**Description**

The present invention is related to a method, in particular a machine learning-based method, a computer program, and an apparatus for detecting a semantic change of a word between domains. The invention is further related to a system for domain-specific text processing or language understanding, which makes use of such a method or apparatus, and to a vehicle comprising such a system.

Human languages constantly change due to cultural, technological, and social drifts. Lexical semantic changes of human languages can be, for example, in the form of introducing or borrowing new words. For already existing words, semantic changes can involve acquiring or losing some senses of the words. Computational methods automating the detection of semantic changes can be extremely helpful in the study of historical texts or text corpora spanning a very long period of time, for example in the design of an optical character recognition algorithm for text digitization, or in designing an information retrieval system incorporating the semantic changes.

Apart from applications in the study of historical or long-term texts, automating the lexical-semantic change detection can automate the detection of drifts in different domains that exist at the same time period. For example, it can be used in compiling training material in certain industries where new senses are introduced for certain words, making the training for new employees more efficient. Further applications can be found in the fields of web search, automatic translation, spell checking systems, etc.

A variety of methods have been introduced for automatic detection of lexical-semantic changes, including co-occurrence-based methods [1], embedding-based approaches [2], topic-based models [3], and alignment-based approaches [4].

One embedding-based approach for the detection of semantic changes, which works based on a comparison of relative distances of words in the embedding spaces of the source and the target domains, is knowns as DomDrift [5].

It is an object of the present invention to provide improved solutions for detecting a semantic change of a word between domains.

This object is achieved by a method according to claim 1, by a computer program according to claim 11, which implements this method, and by an apparatus according to claim 12. The dependent claims include advantageous further developments and improvements of the present principles as described below.

According to a first aspect, a machine learning-based method for detecting a semantic change of a word between domains comprises the steps of:

- training a language model-based embedding separately for text corpora in a first domain and a second domain;
- creating profiles for the word for the first domain and the second domain based on a pivot set generated from the text corpora;
- calculating a divergence of the profiles for the word for the first domain and the second domain; and
- providing the divergence or a value derived from the divergence as a measure of the semantic change.

Accordingly, a computer program comprises instructions, which, when executed by at least one processor, cause the at least one processor to perform the following steps for detecting a semantic change of a word between domains:

- training a language model-based embedding separately for text corpora in a first domain and a second domain;
- creating profiles for the word for the first domain and the second domain based on a pivot set generated from the text corpora;
- calculating a divergence of the profiles for the word for the first domain and the second domain; and
- providing the divergence or a value derived from the divergence as a measure of the semantic change.

The term computer has to be understood broadly. In particular, it also includes workstations, distributed system, embedded devices and other processor-based data processing devices.

The computer program code can, for example, be made available for electronic retrieval or stored on a computer-readable storage medium.

According to another aspect, an apparatus for detecting a semantic change of a word between domains comprises:

- a training module configured to train a language model-based embedding separately for text corpora in a first domain and a second domain;
- a profile module configured to create profiles for the word for the first domain and the second domain based on a pivot set generated from the text corpora;
- a calculation module configured to calculate a divergence of the profiles for the word for the first domain and the second domain; and
- an output module configured to provide the divergence or a value derived from the divergence as a measure of the semantic change.

The solution according to the invention is based on the assumption that the changes in lexical semantics of a word affect its co-occurring words and subsequently alter the neighborhoods in the embedding spaces. Therefore, semantic changes can be detected based on a divergence between embedding-based profiles of words between the source domain and the target domain. For example, the domains can simply be two time periods. However, instead of creating word profiles against all common words in the source domain and the target domain, only words in a pivot set generated from the text corpora are considered. The pivot set contains only words that satisfy specified criteria. In this way, the stability of detection is increased. The solution requires only the raw texts in the domains of interest. One advantage of using embedding-based profiles is that by increasing the window size in the embedding training one can move from syntactic changes toward semantic changes.

In an advantageous embodiment, pivot resamples are generated from the pivot set, profiles for the word are created for the first domain and the second domain for each pivot resample, divergences of the profiles are calculated for each pivot resample, and an aggregation of the divergences is provided as a measure of the semantic change. With the selection of pivot words by a resampling framework, the reliability of the divergences is increased.

In an advantageous embodiment, the aggregation of the divergences is an average of the divergences. The average is a reliable measure of the semantic change of a query word.

In an advantageous embodiment, the divergences are scaled to lie in a specified value range. Depending on how divergences are calculated, the divergences may not have an upper bound. In order to obtain a meaningful average value, it is useful to scale the divergences to a specified value range, e.g. to the range from 0 to 1. For this purpose, an upper bound may be estimated from divergences obtained on resamples of a large set of randomly selected words. This estimated upper bound may then be used for scaling.

In an advantageous embodiment, the divergences are calculated as Kullback-Leibler divergences. The Kullback-Leibler divergence has proven to be a very useful way to measure the difference between two distributions.

In an advantageous embodiment, the pivot set is generated from the text corpora by analyzing a frequency of words in the text corpora. The frequency of a word is a suitable indicator for determining whether a word from the text corpora is to be included in the pivot set.

In an advantageous embodiment, the pivot set is generated by selecting words for the pivot set having a relative frequency that is higher than a first threshold. In this way, only common words, i.e. frequently used words, are included in the pivot set.

In an advantageous embodiment, a change of the relative frequency of the words between the first domain and the second domain is determined. Words whose change of the relative frequency is outside an allowed range are then excluded from the pivot set. The fact that the relative frequency of a word has not dramatically changed is an indicator that its semantic has remained basically unchanged across the domains.

In an advantageous embodiment, the divergence or the value derived from the divergence is provided to a system for domain-specific text processing or language understanding. In this way, the system shows an improved behavior when text processing needs to be performed, e.g. for web searches, automatic translation, or spell checking.

Advantageously, a system for domain-specific text processing or language understanding comprises an apparatus according to the invention or is configured to perform a method according to the invention for detecting a semantic change of a word between domains. Such a system may preferably be used in an autonomous or semi-autonomous vehicle. The vehicle may be any type of vehicle, e.g. a car, a bus, a motorcycle, a commercial vehicle, in particular a truck, an agricultural machinery, a construction machinery, a rail vehicle, etc. More generally, the invention can be used in land vehicles, rail vehicles, watercrafts, and aircrafts.

Furthermore, such a system may be used for an automatic extraction of domain specific words in texts of the automotive industry in comparison with a general corpus, which can be used in the creation of the training materials for employees. It can also be used for detecting changes of the public opinion on certain aspects of cars or brands of a company, e.g. from social media or internal surveys.

Further features of the present invention will become apparent from the following description and the appended claims in conjunction with the figures.

Fig. 1    schematically illustrates a machine learning-based method for detecting a semantic change of a word between domains;

Fig. 2    schematically illustrates a first embodiment of an apparatus for detecting a semantic change of a word between domains;

Fig. 3 schematically illustrates a second embodiment of an apparatus for detecting a semantic change of a word between domains;

Fig. 4 shows an overview of a system for unsupervised detection of lexical-semantic changes; and

Fig. 5 shows a block diagram of an electronics system of a vehicle.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

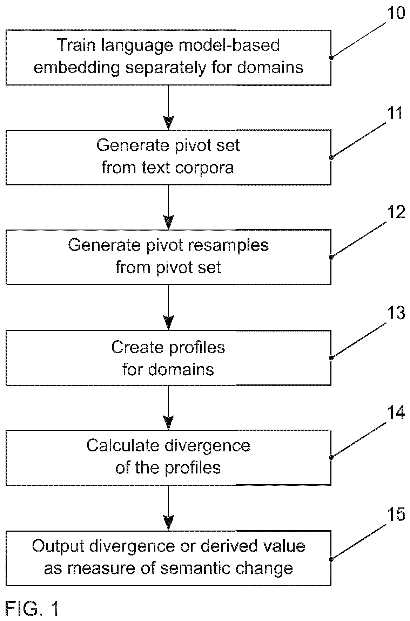

Fig. 1 schematically illustrates a machine learning-based method according to the invention for detecting a semantic change of a word between domains. In a first step, a language model-based embedding is trained 10 separately for text corpora in a first domain and a second domain. Furthermore, a pivot set is generated 11 from the text corpora. For this purpose, a frequency of words in the text corpora may be analyzed. Only words having a relative frequency that is higher than a first threshold are then selected for the pivot set. Furthermore, a change of the relative frequency of the words between the first domain and the second domain may be determined. Words whose change of the relative frequency is outside an allowed range are then excluded from the pivot set. Pivot resamples may be generated 12 from the pivot set. Profiles are then created 13 for the word for the first domain and the second domain based on the pivot set or the pivot resamples. Furthermore, a divergence of the profiles for the word for the first domain and the second domain is calculated 14, e.g. the Kullback-Leibler divergence. Finally, the divergence or a value derived from the divergence is provided 15 as a measure of the semantic change, e.g. to a system for domain-specific text processing or language understanding. For example, an aggregation of the divergences may be provided 15 as a measure of the semantic change, e.g. an average of the divergences. For this purpose, the divergences are preferably scaled to lie in a specified value range.

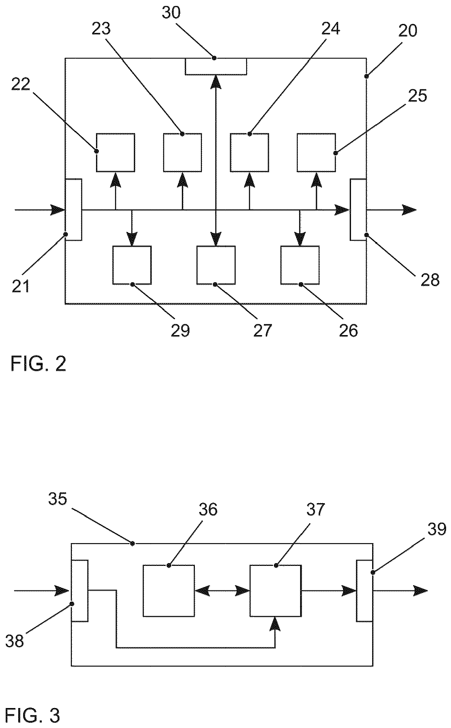

Fig. 2 schematically illustrates a block diagram of a first embodiment of an apparatus 20 according to the invention for detecting a semantic change of a word between domains. The apparatus 20 has an input 21 for receiving data, e.g. text corpora and queries. A training module 22 is configured to train a language model-based embedding separately for text corpora in a first domain and a second domain. A pivot set module 23 is configured to generate a pivot set from the text corpora. For this purpose, the pivot set module 23 may analyze a frequency of words in the text corpora. Only words having a relative frequency that is higher than a first threshold are then selected for the pivot set. Furthermore, the pivot set module 23 may determine a change of the relative frequency of the words between the first domain and the second domain. Words whose change of the relative frequency is outside an allowed range are then excluded from the pivot set. The pivot set module 23 may further be configured to generate pivot resamples from the pivot set. The apparatus 20 further has a profile module 24 configured to create profiles for the word for the first domain and the second domain based on the pivot set or the pivot resamples. A calculation module 25 is configured to calculate a divergence of the profiles for the word for the first domain and the second domain, e.g. the Kullback-Leibler divergence. An output module 26 is configured to provide the divergence or a value derived from the divergence as a measure of the semantic change via an output 28, e.g. to a system for domain-specific text processing or language understanding. For example, an aggregation of the divergences may be provided as a measure of the semantic change, e.g. an average of the divergences. For this purpose, the divergences are preferably scaled to lie in a specified value range. A local storage unit 29 is provided, e.g. for storing data during processing. The output 28 may also be combined with the input 21 into a single bidirectional interface.

The various modules 22-26 of the apparatus 20 may be controlled by a controller 27. A user interface 30 may be provided for enabling a user to modify settings of the various modules 22-26 or the controller 27. The modules 22-26 and the controller 27 can be embodied as dedicated hardware units. Of course, they may likewise be fully or partially combined into a single unit or implemented as software running on a processor, e.g. a CPU or a GPU.

A block diagram of a second embodiment of an apparatus 35 according to the invention for detecting a semantic change of a word between domains is illustrated in Fig. 3. The apparatus 35 comprises a processing device 36 and a memory device 37. For example, the apparatus 35 may be a computer, an electronic control unit or an embedded system. The memory device 37 has stored instructions that, when executed by the processing device 36, cause the apparatus 35 to perform steps according to one of the described methods. The instructions stored in the memory device 37 thus tangibly embody a program of instructions executable by the processing device 36 to perform program steps as described herein according to the present principles. The apparatus 35 has an input 38 for receiving data. Data generated by the processing device 36 are made available via an output 39. In addition, such data may be stored in the memory device 37. The input 38 and the output 39 may be combined into a single bidirectional interface.

The processing device 36 as used herein may include one or more processing units, such as microprocessors, digital signal processors, or a combination thereof.

The local storage unit 29 and the memory device 37 may include volatile and/or non-volatile memory regions and storage devices such as hard disk drives, optical drives, and/or solid-state memories.

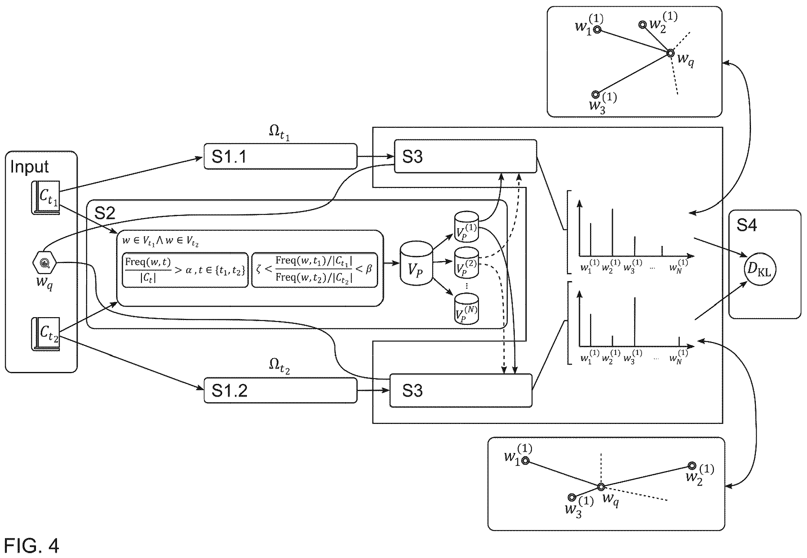

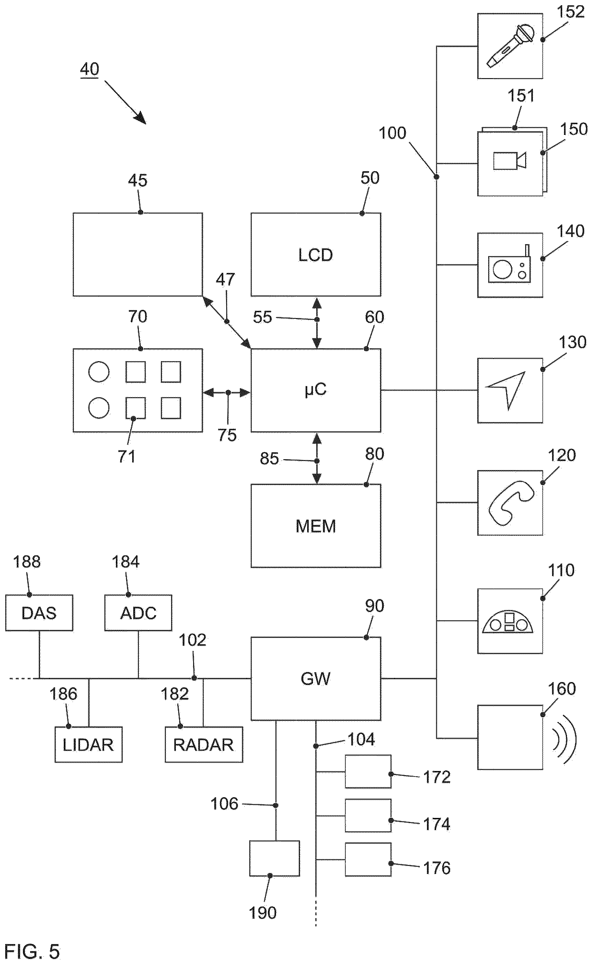

In the following, a preferred embodiment of the invention shall be explained in more detail with reference to Fig. 4 and Fig. 5.

Fig. 4 shows an overview of a system for unsupervised detection of lexical-semantic changes. The underlying framework is based on the assumptions that frequent words change at slower rates, that the relative frequency of unchanged words is not dramatically different in different time periods or domains, and that changes in the word sense also change the context and subsequently alter the neighbors in the embedding space. Thus, the relative drift of a query word with respect to unchanged words in the embedding space can characterize the lexical-semantic change. In the following two time periods $t_1$ and $t_2$ are used as examples of two domains.

Input of the system are a text corpus $C_{t_1}$ for a first domain or time period $t_1$ and a text corpus $C_{t_2}$ for a second domain or time period $t_2$ as well as query with a query word $w_q$. The training of word embeddings using language modeling objective, e.g. skip-gram, has shown to preserve the syntactic and the semantic regularities in the vector space. Semantic changes impact the neighborhoods in the embedding space. Thus, the first step is to train embeddings separately for the text corpora $C_{t_1}$, $C_{t_2}$ in the time periods $t_1$ and $t_2$, which is illustrated in steps S1.1 and S1.2 in Fig. 4. In order to generate the respective embedding spaces $\Omega_{t_1}$, $\Omega_{t_2}$ the only necessary resource is the raw text. For embedding creation, fasttext [6] may be used, which leverages sub-word information within the skip-gram architecture. Using sub-word information minimizes the query terms that are out of vocabulary. The result of this step are separate embedding spaces $\Omega_{t_1}$, $\Omega_{t_2}$ for the time periods $t_1$ and $t_2$, $\Omega_{t_x}$: $V_{t_x} \to \mathbb{R}^{h_{t_x}}$, $t_x \in \{t_1, t_2\}$, mapping their vocabulary $V_{t_x}$ to continuous vector representations in $\mathbb{R}^{h_{t_x}}$.

To measure the degree of semantic change for the given query words in $\Omega_{t_1}$ and $\Omega_{t_2}$, some fixed points are needed, called pivot set $V_P$. The pivot set $V_P$ comprises words with the property that their semantics are not dramatically changed and their relative positions in $\Omega_{t_1}$ and $\Omega_{t_2}$ remain almost constant. For this purpose, based on the assumptions that frequent words change at slower rates, frequent words with a relative frequency higher than an value $\alpha$ in both time periods $t_1$ and $t_2$ are used. Furthermore, in account of the assumption that the relative frequency of unchanged words is not dramatically different in different time periods or domains, the resulting words are filtered by removing words whose relative frequency has changed too much between $t_1$ and $t_2$, resulting in $V_P$. For the filtering step, threshold values $\zeta$, $\beta$ are used. The fixed points are then used to create query profiles in $t_1$ and $t_2$. In order to increase the reliability and make variance analysis possible, *N* resamples are executed, each containing *M* words from $V_P: V_P^{(1)}, V_P^{(2)}, ..., V_P^{(N)}$. The generation of the pivot set $V_P$ and the pivot resamples $V_P^{(i)}$ is illustrated in step S2 in Fig. 4.

In the next step S3, for each query word, profiles *P* in $t_1$ and $t_2$ are created based on the pivot resamples. The profile in time *t* is an *l*1 normalized embedding similarity vector of the query to the terms in $V_P^{(i)}$:

$$P\left(w_q, V_P^{(i)}, \Omega_t\right)_j = \frac{\exp\left(\phi \cos\left(\overrightarrow{w_q}, \overrightarrow{w_j^{(i)}}\right)\right)}{\sum_{w_k^{(i)} \in V_P^{(i)}} \exp\left(\phi \cos\left(\overrightarrow{w_q}, \overrightarrow{w_k^{(i)}}\right)\right)}, \qquad (1)$$

where $V_P^{(i)}$ is the *i*th resample from the pivot set created in step S2, $w_q$ is the query word, $w_k^{(i)}$ is the *k*th word in the *i*th resample, $\overrightarrow{w}$ is the vector representation of word w in the embedding space $\Omega_t$, and $\phi$ is the temperature of a softmax function, which is used as a hyper parameter. Hence, for each $V_P^{(i)}$ one profile in $t_1$ and one profile in $t_2$ are created.

In the next step S4, for each resample $V_P^{(i)}$ the divergence between the profile in the time period $t_1$ and the time period $t_2$ is calculated using the Kullback-Leibler-divergence:

$$\lambda_i = D_{\mathrm{KL}}\left(P\left(w_q, V_P^{(i)}, \Omega_{t_1}\right) || P\left(w_q, V_P^{(i)}, \Omega_{t_2}\right)\right). \qquad (2)$$

The $\lambda_i$'s are averaged over *N* resamples as a measure of semantic change for the query word $w_q$. Since $D_{\mathrm{KL}}$ does not have an upper bound, an upper bound may be estimated based on $\lambda_i$'s on resamples of a large set of randomly selected words $V_{\mathrm{explore}}$ including $V_P$ and a set of words with a change in their relative frequency. *K* resamples of size *M'* words are drawn from $V_{\mathrm{explore}}$ and the $\lambda_k$'s are calculated, i.e. the $\lambda$'s of words in the *k*th resample of $V_{\mathrm{explore}}$. The average of the 90th percentile over *K* resamples is selected as the upper bound and the average of the 10th percentile as the lower bound of the $\lambda$ to scale any calculated $\lambda_i$ for a query word to $\hat{\lambda}_i$ with $0 \le \hat{\lambda}_i \le 1$. Considering a threshold of *h*, $\overline{\lambda} > h$ may be assigned to the category of lexical semantic change, which can be adjusted as a hyper parameter on a validation set.

To show that the solution according to the present invention can reliably detect lexical-semantic changes, it has been applied to a dataset including corpora of English, German, Swedish, and Latin texts. More details on the on the exact time frames and data sizes are provides in the following table:

| Language | $t_1$: time period (# of tokens) | $t_2$: time period (# of tokens) |
|---|---|---|
| English | 1810-1860 (6.6M) | 1960-2010 (6.8M) |
| German | 1800-1899 (70.2M) | 1946-1990 (72.4M) |
| Swedish | 1790-1830 (71.1M) | 1895-1903 (110.8M) |
| Latin | -200-0 (1.8M) | 0-2000 (9.4M) |

The goal was to detect the words whose semantic has been changed between the given time periods $t_1$ and $t_2$ in the four languages. In particular, two different tasks are considered, i.e classification and ranking. The goal of classification was the binary detection of a lexical semantic change between $t_1$ and $t_2$ for a given word w. The goal of ranking was the ranking of lexical-semantic changes for a given list of words ($w_1$, $w_2$, ..., $w_M$) by assigning scores quantifying the relative changes of the word sense.

For the language-model-based embedding setup, fasttext embedding using the skip-gram architecture was trained for each pair of language and time period separately. In the training of fasttext, the window size was set to c = 7 and the embedding size to d = 100. In the presence of a validation set, both c and d can be optimized as the hyper-parameters for each setting. It is known that larger values of c are favorable for semantics representation of words, whereas smaller values of c are favorable for a syntax-related representation.

For the creation of pivot resamples, as a first step a set of common frequent words in both $t_1$ and $t_2$ was prepare for each language, setting the threshold $\alpha$ for the relative frequency in way that the top 10%-20% frequent words are select. As a next step, this set was filtered to keep only those words for which the ratio of their normalized frequency is not substantially changed, resulting in the pivot set $V_P$. For filtering, the condition $\frac{2}{3} < \frac{\text{freq}_{t_1}(w)}{\text{freq}_{t_2}(w)} < \frac{3}{2}$ was used. As a final step, $N = 10$ resamples were drawn from $V_P$ with a size of $M = 5000$ for each language.

For the creation of query profiles, for each query word profiles in $t_1$ and $t_2$ were created for all $N = 10$ pivot resamples.

For the calculation of the profile divergence, for each of the $N$ resamples $V_P^{(i)}$ the divergence $\lambda_i$ was calculated and scaled to $\hat{\lambda}_i$ using $K = 5$ resamples of size $M' = 5000$ words drawn from $V_{\text{explore}}$. Subsequently, for the binary detection of changes, different thresholds $h$ were applied over the average $\overline{\lambda}$ of the scaled divergences of the $V_P^{(i)}$'s, i.e. the average of the $\hat{\lambda}_i$'s. $\overline{\lambda} > h$ was then assigned to the category of lexical semantic change

For the purpose of evaluation, a ground truth annotated by native speakers or scholars of the respective language was used. In the case of binary detection, the accuracy metric is used to compare the given ground-truth and the predicted lexical semantic changes. For the ranking setting, both the Pearson correlation coefficient and Kendall-$\tau$ are indicated to measure the correspondence between the calculated divergences, i.e. the $\overline{\lambda}$'s, and the provided ground-truth scores.

The results of the described framework in the detection and the quantification of changes in the lexical semantics in English, German, Swedish, and Latin are provided in the following table:

| Language | Accuracy in binary detection | h | Pearson correlation | Kendall-$\tau$ | Kendall-$\tau$ p-value |
|---|---|---|---|---|---|
| English | 70.3 | 0.4 | 0.314 | 0.292 | 0.034 |
| German | 75.0 | 0.5 | 0.432 | 0.315 | 0.009 |
| Swedish | 77.4 | 0.4 | 0.316 | 0.383 | 0.0115 |
| Latin | 60.0 | 0.15 | 0.162 | 0.161 | 0.222 |
| Average | 70.7 | | 0.306 | | |

With regard to the binary detection, the framework was able to detect the semantic changes in English, German, Swedish, and Latin with an accuracy of 70.3%, 75.3%, 77.4%, and 60%, respectively. The selected $h$ values, i.e. the thresholds to assign the positive or the negative class for each language, are also provided in the table.

With regard to the ranking, the Kendall-$\tau$ p-values for English, German, and Swedish show that there is a significant correspondence between the scores of the framework and the ground truth scores in those languages. The Pearson correlation is also calculated for all languages, with an average of 0.306 over four languages. The case of Latin has been more challenging in both binary and graded prediction of lexical semantic change. One reason behind this may be the imbalance of embedding training instances for Latin $t_1$ and Latin $t_2$ as well as the overall smaller corpora for Latin in comparison to the other languages. Another reason may be the split of the time frames, where $t_2$ in Latin spans a large period of 2000 years.

Fig. 5 schematically shows a block diagram of a board electronics system of a vehicle 40, which is suitable for use with a solution for detecting a semantic change of a word between domains. Part of the board electronics system is an infotainment system, which comprises a system 45 for domain-specific text processing or language understanding, e.g. for performing web searches, automatic translation, or spell checking, a touch-sensitive display unit 50, a computing device 60, an input unit 70, and a memory device 80. The system 45 is connected to the computing device 60 via a data line 47 and may include an apparatus for detecting a semantic change of a word between domains. Alternatively, the system may receive data about a detected semantic change of a word from a backend remote from the vehicle 40. The display unit 50 is connected to the computing device 60 via a data line 55 and includes both a display area for displaying variable graphical information and an operator interface (touch-sensitive layer) arranged above the display area for inputting commands by a user. The input unit 70 is connected to the computing device 60 via a data line 75. Reference numeral 71 designates a press button that allows a driver to manually request a tele-operated driving session if the vehicle is blocked and the driver wants the support of a tele-operated driving operator to find a way out of the blocking situation. There is no need for a dedicated press button 71 if other techniques for manual control are used. This includes selecting an option in a user menu displayed on the display unit 50, detecting the command with speech recognition, or using gesture control means.

The memory device 80 is connected to the computing device 60 via a data line 85. In the memory device 80, a pictogram directory and/or symbol directory is deposited with pictograms and/or symbols for possible overlays of additional information.

The other parts of the infotainment system, such as a microphone 152, a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an automatic driving control (ADC) unit 184, etc., may be provided in the vehicle. A plurality of further driver assistance systems (DAS) 188 may be provided. The components 182 to 188 are connected to another communication bus 102, e.g. an Ethernet-Bus due to its higher bandwidth for data transport. One Ethernet-bus adapted to the special needs of car communication is standardized in the IEEE 802.1Q specification.

Reference numeral 190 denotes an on-board diagnosis interface, which is connected to another communication bus 106.

For the purpose of exchanging relevant data via the an on-board connectivity module 160 with a backend, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to the backend, the on-board connectivity module 160 is equipped with a communication interface to receive these data packets and, in turn, to convert them into the transmission format of the appropriate mobile radio standard.

## References

[1] E. Sagi et al.: "Semantic density analysis: Comparing word meaning across time and phonetic space", Proceedings of the Workshop on Geometrical Models of Natural Language Semantics (2009), pp. 104-111.

[2] Y. Kim et al.: "Temporal analysis of language through neural language models", Proceedings of the ACL 2014 Workshop on Language Technologies and Computational Social Science (2014), pp. 61-65.

[3] L. Frermann et al.: "A bayesian model of diachronic meaning change", Transactions of the Association for Computational Linguistics, Vol. 4 (2016), pp. 31-45.

[4] D. Bamman et al.: "Measuring historical word sense variation", Proceedings of the 11th annual international ACM/IEEE joint conference on Digital libraries (2011), pp. 1-10.

[5] E. Asgari et al.: "UniSent: Universal Adaptable Sentiment Lexica for 1000+ Languages", arXiv: 1904.09678 (2019) (https://arxiv.org/abs/1904.09678).

[6] P. Bojanowski et al.: "Enriching word vectors with subword information", Transactions of the Association for Computational Linguistics, Vol. 5 (2017), pp. 135-146.

**Reference numerals**

| | |
|---|---|
| 10 | Train language model-based embedding separately for domains |
| 11 | Generate pivot set from text corpora |
| 12 | Generate pivot resamples from pivot set |
| 13 | Create profiles for domains |
| 14 | Calculate divergence of the profiles |
| 15 | Output divergence or derived value as measure of semantic change |
| 20 | Apparatus |
| 21 | Input |
| 22 | Training module |
| 23 | Pivot set module |
| 24 | Profile module |
| 25 | Calculation module |
| 26 | Output module |
| 27 | Controller |
| 28 | Output |
| 29 | Local storage unit |
| 30 | User interface |
| 35 | Apparatus |
| 36 | Processing device |
| 37 | Memory device |
| 38 | Input |
| 39 | Output |
| 40 | Vehicle |
| 45 | System for domain-specific text processing or language understanding |
| 47 | Data line to system |
| 50 | Display Unit |
| 55 | Data line to display unit |
| 60 | Computing device |
| 70 | Input unit |
| 71 | Press button |
| 75 | Data line to input unit |
| 80 | Memory unit |
| 85 | Data line to memory unit |
| 90 | Gateway |
| 100 | First data bus |
| 102 | Second data bus |
| 104 | Third data bus |
| 106 | Fourth data bus |
| 110 | Instrument cluster |
| 120 | Telephone |
| 130 | Navigation device |
| 140 | Radio |
| 150 | Camera |
| 151 | Further cameras |
| 152 | Microphone |
| 160 | On-board connectivity module |
| 172 | Engine control unit |
| 174 | Electronic stability control unit |
| 176 | Transmission control unit |
| 182 | RADAR sensor |
| 184 | Automatic driving control unit |
| 186 | LIDAR sensor |
| 190 | On-board diagnosis interface |
| S1.1 | Training of embedding space for first time period |

S1.2    Training of embedding space for second time period

S2       Selection of pivot set and generation of resamples

S3       Creation of query profiles

S4       Calculation of profile divergence

**Claims**

1.  A machine learning-based method for detecting a semantic change of a word ($w_q$) between domains, the method comprising:

    - training (10) a language model-based embedding separately for text corpora ($C_{t_1}$, $C_{t_2}$) in a first domain and a second domain;
    - creating (13) profiles (P) for the word ($w_q$) for the first domain and the second domain based on a pivot set ($V_P$) generated (11) from the text corpora ($C_{t_1}$, $C_{t_2}$);
    - calculating (14) a divergence ($\lambda$, $\lambda_i$) of the profiles (P) for the word ($w_q$) for the first domain and the second domain; and
    - providing (15) the divergence ($\lambda$, $\lambda_i$) or a value derived from the divergence ($\lambda$, $\lambda_i$) as a measure of the semantic change.

2.  The method according to claim 1, wherein the first domain is a first time period ($t_1$) and the second domain is a second time period ($t_2$).

3.  The method according to claim 1 or 2, wherein pivot resamples $(V_P^{(i)})$ are generated (12) from the pivot set ($V_P$), profiles (P) for the word ($w_q$) are created (13) for the first domain and the second domain for each pivot resample $(V_P^{(i)})$, divergences ($\lambda_i$) of the profiles (P) are calculated (14) for each pivot resample $(V_P^{(i)})$, and an aggregation of the divergences ($\lambda_i$) is provided (15) as a measure of the semantic change.

4.  The method according to claim 3, wherein the aggregation of the divergences ($\lambda_i$) is an average of the divergences ($\lambda_i$).

5.  The method according to claim 3 or 4, wherein the divergences ($\lambda_i$) are scaled to lie in a specified value range.

6.  The method according to any of the preceding claims, wherein the divergences ($\lambda$, $\lambda_i$) are calculated (14) as Kullback-Leibler divergences.

7.  The method according to any of the preceding claims, wherein the pivot set ($V_P$) is generated (11) from the text corpora ($C_{t_1}$, $C_{t_2}$) by analyzing a frequency of words in the text corpora ($C_{t_1}$, $C_{t_2}$).

8.  The method according to claim 7, wherein the pivot set ($V_P$) is generated (11) by selecting words for the pivot set ($V_P$) having a relative frequency that is higher than a first threshold ($\alpha$).

9.  The method according to claim 8, further comprising determining a change of the relative frequency of the words between the first domain and the second domain and excluding words from the pivot set ($V_P$) whose change of the relative frequency is outside an allowed range.

10. The method according to any of the preceding claims, wherein the divergence ($\lambda$, $\lambda_i$) or the value derived from the divergence ($\lambda$, $\lambda_i$) is provided (15) to a system for domain-specific text processing or language understanding.

11. A computer program comprising instructions, which, when executed by a computer, cause the computer to perform a method according to any of claims 1 to 10 for detecting a semantic change of a word ($w_q$) between domains.

12. An apparatus (20) for detecting a semantic change of a word ($w_q$) between domains based on machine learning, the apparatus (20) comprising:

    - a training module (22) configured to train (10) a language model-based embedding separately for text corpora

$(C_{t_1}, C_{t_2})$ in a first domain and a second domain;
- a profile module (24) configured to create (13) profiles ($P$) for the word ($w_q$) for the first domain and the second domain based on a pivot set ($V_P$) generated (11) from the text corpora ($C_{t_1}, C_{t_2}$);
- a calculation module (25) configured to calculate (14) a divergence ($\lambda, \lambda_i$) of the profiles ($P$) for the word ($w_q$) for the first domain and the second domain; and
- an output module (26) configured to provide (15) the divergence ($\lambda, \lambda_i$) or a value derived from the divergence ($\lambda, \lambda_i$) as a measure of the semantic change.

13. A system (45) for domain-specific text processing or language understanding, **characterized in that** the system (45) comprises an apparatus (20) according to claim 12 or is configured to perform a method according to any of claims 1 to 10 for detecting a semantic change of a word ($w_q$) between domains.

14. A vehicle (40), **characterized in that** the vehicle (40) comprises a system (45) for domain-specific text processing or language understanding according to claim 13.

15. The vehicle (40) according to claim 14, wherein the vehicle (40) is an autonomous driving vehicle.

FIG. 1

**FIG. 2**

**FIG. 3**

FIG. 4

FIG. 5

Europäisches Patentamt

European Patent Office

Office européen des brevets

# EUROPEAN SEARCH REPORT

Application Number

EP 20 19 0280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/157644 A1 (MANDT STEPHAN MARCEL [US] ET AL) 7 June 2018 (2018-06-07) * abstract * * paragraph [0004]; figures 1,2,4 * ----- | 1-15 | INV. G06F40/30 |
| A,D | DAVID BAMMAN ET AL: "Measuring historical word sense variation", DIGITAL LIBRARIES, ACM, 2 PENN PLAZA, SUITE 701 NEW YORK NY 10121-0701 USA, 13 June 2011 (2011-06-13), pages 1-10, XP058003938, DOI: 10.1145/1998076.1998078 ISBN: 978-1-4503-0744-4 * abstract * ----- | 1,11-14 | |

TECHNICAL FIELDS SEARCHED (IPC)

G06F

The present search report has been drawn up for all claims

| Place of search | Date of completion of the search | Examiner |
|---|---|---|
| Berlin | 28 January 2021 | Triest, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 19 0280

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2021

| Patent document cited in search report | Publication date | Patent family member(s) | Publication date |
|---|---|---|---|
| US 2018157644 A1 | 07-06-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. SAGI et al.** Semantic density analysis: Comparing word meaning across time and phonetic space. *Proceedings of the Workshop on Geometrical Models of Natural Language Semantics,* 2009, 104-111
- **Y. KIM et al.** Temporal analysis of language through neural language models. *Proceedings of the ACL 2014 Workshop on Language Technologies and Computational Social Science,* 2014, 61-65
- **L. FRERMANN et al.** A bayesian model of diachronic meaning change. *Transactions of the Association for Computational Linguistics,* 2016, vol. 4, 31-45
- **D. BAMMAN et al.** Measuring historical word sense variation. *Proceedings of the 11th annual international ACM/IEEE joint conference on Digital libraries,* 2011, 1-10
- **E. ASGARI et al.** *UniSent: Universal Adaptable Sentiment Lexica for 1000+ Languages,* 2019, https://arxiv.org/abs/1904.09678
- **P. BOJANOWSKI et al.** Enriching word vectors with subword information. *Transactions of the Association for Computational Linguistics,* 2017, vol. 5, 135-146